# EUROPÄISCHE PATENTANMELDUNG

(11) **EP 4 257 009 A1**
(43) Veröffentlichungstag der Anmeldung: **11.10.2023**
(21) Anmeldenummer: 22167399.9
(22) Anmeldetag: 08.04.2022
(51) Int. Cl.: A47B 9/20, B01L 9/02, B25H 3/00, B60B 33/00

(54) **HANDARBEITSPLATZ MIT ZUSCHALTBAREN LAUFROLLEN UNTER AUSNUTZUNG EINER VORHANDENEN HÖHENVERSTELLUNG**

(71) Anmelder: Mehltretter, J. Michael, 82049 Pullach (DE)
(72) Erfinder: Mehltretter, J. Michael, 82049 Pullach (DE)
(74) Vertreter: Lohr, Jöstingmeier & Partner

(57) **Zusammenfassung**

Ein Arbeitsplatz umfasst ein Fussprofil mit 4 Standfüssen, eine Arbeitsplatte, sowie zwei Hubeinheiten zur Höhenverstellung der Arbeitsplatte, angeordnet zwischen dem Fussprofil und der Arbeitsplatte. Weiterhin ist an jeder Hubeinheit ein Rollenträger mit jeweils zwei Rollen angeordnet. Die Rollenträger sind in einem festen Abstand von der Arbeitsplatte und durch die Hubeinheit zusammen mit der Arbeitsplatte höhenverstellbar angeordnet, wobei die Rollen in einer unteren Position der Arbeitsplatte unter die Standfüße hinausragen.

## Beschreibung

### Technisches Gebiet

Die Erfindung betrifft einen Handarbeitsplatz, wie er in einem Labor oder einer Werkstatt beispielsweise zur manuellen Montage einsetzbar ist.

### Stand der Technik

Die EP 2 308 344 A1 offenbart einen Werkstatt-Arbeitstisch mit einer höhenverstellbaren Arbeitsplatte, der wahlweise mit festen Füssen oder drehbaren Rollen ausgestattet ist. Die Variante mit festen Füssen bietet ein hohes Maß an Standfestigkeit, während die Rollen ein einfaches Verschieben des Arbeitstisches ermöglichen. Die Rollen haben eine Sperre gegen Wegrollen, sind aber immer um eine Achse senkrecht zum Boden drehbar. Dadurch lässt sich nur eine begrenzte Standsicherheit erreichen.

Die EP 3 339 223 A1 offenbart einen Arbeitsplatz mit einer höhenverstellbaren Arbeitsplatte und mit festen Standfüssen. Damit wird eine hohe Standsicherheit erreicht. Aufgrund seines hohen Gewichtes kann dieser nur mit Hilfsmitteln wie beispielsweise einem Hubwagen bewegt werden. Damit ein Hubwagen unter dem Fussprofil des Arbeitsplatzes eingreifen kann, muss vorübergehend zum Transport ein zusätzliches Querprofil zwischen den seitlichen Fußprofilen montiert werden.

### Darstellung der Erfindung

Der Erfindung liegt die Aufgabe zugrunde, einen Arbeitsplatz mit einer höhenverstellbaren Arbeitsplatte zu gestalten, der eine hohe Standsicherheit aufweist und gleichzeitig auf einfache Weise transportierbar ist.

Diese Aufgabe wird durch eine Vorrichtung nach Anspruch 1 gelöst. Vorteilhafte Ausgestaltungen der Erfindung sind in den Unteransprüchen angegeben.

In einer Ausführungsform umfasst ein Arbeitsplatz ein Fußprofil mit Standfüßen, eine Arbeitsplatte sowie wenigstens eine Hubeinheit zur Höhenverstellung der Arbeitsplatte gegenüber dem Fussprofil. Die Hubeinheit kann zwischen dem Fußprofil und der Arbeitsplatte angeordnet sein.

Das Fußprofil kann ein Aluminium- oder Stahlprofil umfassen. Es kann zwei parallele Profile umfassen, welche an gegenüberliegenden Seiten der Arbeitsplatte angeordnet sind. In einer besonders stabilen Ausführungsform hat das Fußprofil eine U-Form, wobei ein Querträger parallel zu einer Hinterseite der Arbeitsplatte die beiden zuvor beschriebenen parallelen, seitlichen Profile miteinander verbindet.

Das Fußprofil selbst kann so ausgestaltet sein, dass es unmittelbar auf einem Fußboden aufliegen kann. Besonders günstig ist es jedoch, wenn das Fußprofil Standfüße aufweist. Diese können höhenverstellbar sein, um Unebenheiten eines Fußbodens auszugleichen. Um einen stabilen Stand zu erreichen, sind wenigstens drei Standfüße notwendig. Typischerweise werden vier Standfüße eingesetzt. Jeder dieser Standfüße definiert eine Standfläche, mit der er auf einem Fußboden aufliegen kann.

Die Arbeitsplatte kann eine Tischplatte, beispielsweis aus Holz oder auch aus Metall sein. Unter der Arbeitsplatte kann eine Trägerstruktur, beispielsweise aus weiteren Profilen angeordnet sein, um die Stabilität der Arbeitsplatte zu erhöhen.

Die wenigstens eine Hubeinheit zwischen dem Fußprofil und der Arbeitsplatte ist konfiguriert für eine Höhenverstellung der Arbeitsplatte. Dadurch kann die Arbeitsplatte in verschiedene Arbeitshöhen eingestellt werden. Dies ermöglicht eine ergonomische Anpassung an die individuellen Anforderungen der Person, die an dem Arbeitsplatz arbeitet. Die wenigstens eine Hubeinheit kann elektrisch, pneumatisch oder hydraulisch angetrieben sein. Besonders günstig ist ein elektrischer Antrieb, der insbesondere auf einfache Weise, beispielsweise durch Schalter, steuerbar ist. Zudem kann die Hubeinheit einen Speicher aufweisen, in dem verschiedene Positionen abgespeichert sein können.

Am Arbeitsplatz ist wenigstens ein Rollenträger mit wenigstens einer Rolle angeordnet. Der wenigstens eine Rollenträger mit wenigstens einer Rolle ist durch die Hubeinheit zusammen mit der Arbeitsplatte höhenverstellbar gegenüber dem Fußprofil. Der wenigstens eine Rollenträger kann in einem festen Abstand (in der Höhe) zur Arbeitsplatte angeordnet sein, sodass mit einer Höhenverstellung der Arbeitsplatte auch der Abstand des wenigstens einen Rollenträgers über dem Fußboden einstellbar ist. Das heißt, mit der Arbeitsplatte wird die wenigstens eine Rolle in der Höhe verstellt. Der wenigstens eine Rollenträger umfasst weiterhin wenigstens eine Rolle, bevorzugt zwei Rollen, welche bevorzugt jeweils an einem Ende des wenigstens einen Rollenträgers angeordnet sind. Die Rollenträger können an den Hubeinheiten derart angeordnet sein, dass sie sich mit einer Bewegung der Hubeinheit und zusammen mit der Tischplatte in der Höhe bewegen.

Besonders günstig ist es, wenn zwei Hubeinheiten, beispielsweise an den kurzen Seiten der Arbeitsplatte, angeordnet sind und parallel bzw. synchron betrieben werden. Es können aber auch weitere Hubeinheiten an anderen Seiten der Arbeitsplatte angebracht sein. Insbesondere ist es auch möglich, eine Anordnung mit nur einer einzigen Hubeinheit, welche bevorzugt zentral zur Arbeitsplatte angeordnet ist, auszugestalten. In letzterem Falle müsste ein Rollenträger dann wenigstens drei oder vier Rollen aufweisen, um einen stabilen Stand zu erzielen.

Die wenigstens eine Hubeinheit ist nun so konfiguriert, dass sie eine untere Position einnehmen kann. In dieser unteren Position ragt die wenigstens eine Rolle unter die Standfüße bzw. unter eine Standfläche der Standfüße oder unter eine durch die Standflächen der Standfüße definierte Ebene hinaus. Dadurch können die Rollen auf dem Boden aufliegen, während die Standfüße vom Boden abgehoben werden. Sobald die Rollen auf einem Fußboden aufliegen, kann der Arbeitsplatz auf einfache Weise und mit geringem Kraftaufwand verschoben bzw. in seiner Position verändert werden. Wird der Arbeitsplatz bzw. die Tischplatte bzw. die wenigstens eine Hubeinheit in eine Arbeitsposition gebracht, welche zumindest so weit über der unteren Position liegt, dass nun wieder die wenigstens drei Standfüße auf dem Fußboden aufliegen und die wenigstens eine Rolle keinen Kontakt mehr mit dem Fußboden hat, so steht der Arbeitsplatz stabil auf dem Fußboden auf. Er kann nun nur noch mit großem Kraftaufwand bewegt werden und bietet einen sicheren Stand, um auf der Arbeitsplatte zu arbeiten. Es sind hier auch keine weiteren Bremsen, insbesondere Bremsen an den Rollen, notwendig, da diese ohnehin keinen Kontakt mehr mit dem Fußboden haben.

Die untere Position kann durch einen Endschalter, einen Endanschlag oder durch einen gespeicherten Positionswert vorgegeben sein. Dadurch kann sie beispielsweise durch Betätigung einer speziellen Taste an einer Steuereinheit auf einfache Weise aufgerufen werden. Diese untere Position könnte aber auch durch eine Verriegelung, wie beispielsweise einen Schlüsselschalter oder einen Programmiercode gesichert sein, um ein unbeabsichtigtes oder unbefugtes Verschieben des Arbeitsplatzes zu verhindern.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine Ausführungsform eines Arbeitsplatzes.
Figur 2 zeigt die wenigstens eine Hubeinheit in einer Arbeitsstellung
Figur 3 zeigt die wenigstens eine Hubeinheit in einer unteren Position

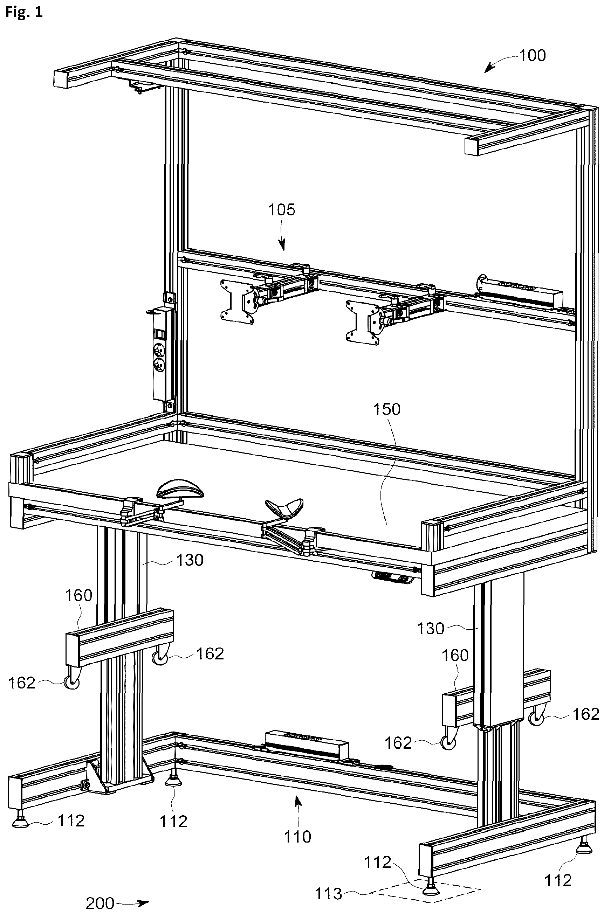

Figur 1 zeigt eine Ausführungsform eines Arbeitsplatzes. Der Arbeitsplatz 100 umfasst ein Fußprofil 110 mit wenigstens drei Standfüßen 112. Hier ist eine Ausführung mit vier Standfüßen 112 dargestellt. Die Standfüße könnten eine Vorrichtung zur Höheneinstellung umfassen, wie beispielsweise ein Gewinde. Damit könnte durch Drehen der Standfüße der Abstand zum Fußprofil eingestellt werden, sodass ein Arbeitsplatz stabil auf einer Unterlage steht. Die Standfüße 112 haben eine Standfläche 113, welche üblicherweise der Oberfläche eines Fußbodens 200 entspricht.

Auf dem Fußprofil 110 ist wenigstens eine Hubeinheit 130 angeordnet, welche wiederum eine Arbeitsplatte 150 trägt. In der vorliegenden Figur sind zwei Hubeinheiten 130 parallel an den kurzen Seiten der Arbeitsplatte angeordnet. Es könnten auch jeweils zwei Hubeinheiten an jeder kurzen Seite und/oder Hubeinheiten an einer oder mehreren Längsseiten der Arbeitsplatte angeordnet sein. Sobald mehrere Hubeinheiten parallel verwendet werden, könnten diese synchron miteinander betrieben werden, um einen Schrägstand der Arbeitsplatte zu vermeiden, sofern dies nicht beabsichtigt ist.

Weiterhin ist wenigstens ein Rollenträger 160 mit wenigstens einer Rolle 162 in einem festen Abstand unterhalb der Arbeitsplatte angebracht. In der hier dargestellten Ausführungsform ist an jeder Hubeinheit ein Rollenträger mit jeweils zwei Rollen vorgesehen, wobei jeweils eine Rolle an einem Ende eines Rollenträgers angeordnet ist. Durch eine Bewegung der wenigstens einen Hubeinheit zusammen mit der Arbeitsplatte werden auch die Rollenträger in der Höhe bewegt.

Die wenigstens eine Hubeinheit ist derart konfiguriert, dass sie wenigstens eine untere Position einnehmen kann, bei welcher die Standfläche 113 der wenigstens drei Standfüße 112 unter die Standfläche der wenigstens drei Standfüße 112 hinausragt. Damit stehen in dieser unteren Position die Rollen, welche an der Unterseite der Rollenträger angeordnet sein können, sodass die wenigstens eine Rolle auf einen darunterliegenden Fußboden aufstehen kann, ohne dass der Rollenträger den Fußboden berührt.

Stehen nun in einer unteren Position die Rollen auf dem Fußboden auf, so kann der Arbeitsplatz mit geringem Kraftaufwand verschoben bzw. in seiner Position verändert werden. Wird die wenigstens eine Hubeinheit wieder in eine Arbeitsposition, welche über der unteren Position liegt, gebracht, so wird die wenigstens eine Rolle vom Fußboden abgehoben und der Arbeitsplatz steht wieder mittels seines Fußprofils und der daran angebrachten Standfüße auf dem Fußboden auf. Durch die Reibung der Standfüße ist der Arbeitsplatz dann nicht mehr oder nur noch mit sehr hohem Kraftaufwand verschiebbar. Somit befindet er sich in einer stabilen Arbeitslage, in der sicher am Arbeitsplatz gearbeitet werden kann.

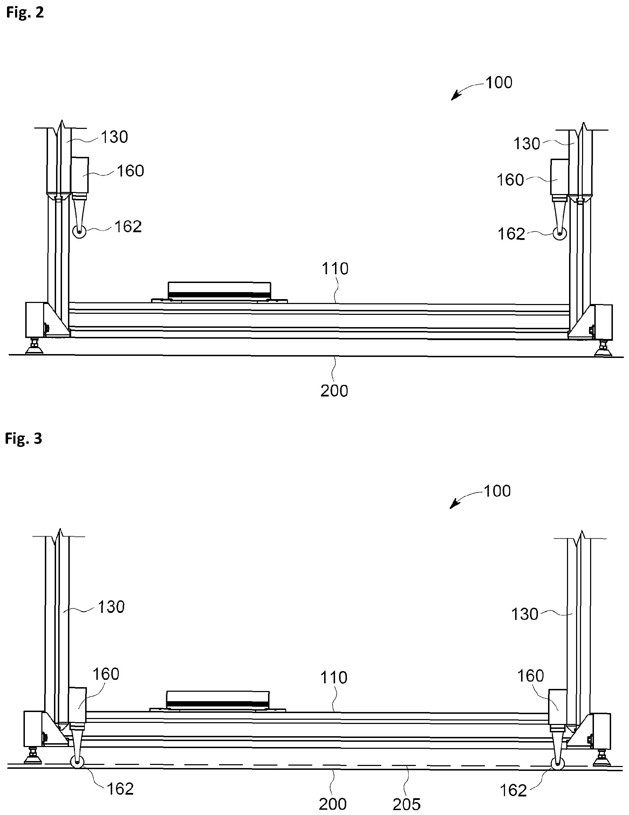

Figur 2 zeigt die wenigstens eine Hubeinheit 130 in einer Arbeitsstellung, welche oberhalb der unteren Position liegt und wobei der Arbeitsplatz stabil auf einem Fußboden 200 aufsteht. Hier ist deutlich zu erkennen, dass die Rollen 162 nicht auf dem Fußboden aufstehen.

Figur 3 zeigt die wenigstens eine Hubeinheit 130 in einer unteren Position, in der nun die Rollen 162 auf dem Fußboden 200 aufstehen und die Standfüße 112 in einer Höhe 205 über dem Fußboden beabstandet sind. Hier kann nun der Arbeitsplatz mithilfe der Rollen durch geringen Kraftaufwand verschoben werden.

Die Höhe 205 kann relativ gering sein. Es sollten nur die Standfüße 112 keinen Kontakt mehr zum Fußboden haben. Bei einer geringen Höhe 205 kann das Fußprofil 110 noch als Kippsicherung wirken und so den Arbeitsplatz vor einem versehentlichen Kippen während des Verschiebens sichern.

### Bezugszeichenliste

- 100: Arbeitsplatz
- 110: Fussprofil
- 112: Standfüße
- 113: Standfläche
- 130: Hubeinheit
- 150: Arbeitsplatte
- 160: Rollenträger
- 162: Rolle
- 200: Fußboden
- 205: Ebene der Standfüße über dem Fußboden

## Patentansprüche

1. Arbeitsplatz (100) umfassend:
- ein Fussprofil (110) mit wenigstens 3 Standfüssen (112) mit einer Standfläche (113),
- eine Arbeitsplatte (150)
- wenigstens eine Hubeinheit (130) zur Höhenverstellung der Arbeitsplatte (150) gegenüber dem Fussprofil (110),
**dadurch gekennzeichnet, dass**
wenigstens ein Rollenträger (160) mit wenigstens einer Rolle (162) durch die Hubeinheit (130) zusammen mit der Arbeitsplatte (150) höhenverstellbar gegenüber dem Fussprofil (110) angeordnet ist, wobei die wenigstens eine Rolle (162) in einer unteren Position der Arbeitsplatte (150) unter die wenigstens 3 Standfüße (112) hinausragt.

2. Arbeitsplatz (100) nach Anspruch 1,
**dadurch gekennzeichnet, dass**
das Fussprofil (110) 4 Standfüße (112) umfasst,
zwei Hubeinheiten (130) zwischen dem Fussprofil (110) und der Arbeitsplatte (150) angeordnet sind, und
jeder Hubeinheit (130) ein Rollenträger (160) mit jeweils zwei Rollen (162) zugeordnet ist.

3. Arbeitsplatz (100) nach einem der vorhergehenden Ansprüche,
**dadurch gekennzeichnet, dass**
in der unteren Position der Arbeitsplatte (150) die wenigstens eine Rolle (162) auf einem Fußboden aufsteht und die wenigstens 3 Standfüße (112) von dem Fußboden abgehoben sind.

4. Arbeitsplatz (100) nach einem der vorhergehenden Ansprüche,
**dadurch gekennzeichnet, dass**
wenigstens eine Hubeinheit (130) konfiguriert ist, die Arbeitsplatte (150) in die untere Position und in eine darüber liegende Arbeitsposition zu bringen, bei der die wenigstens eine Rolle (162) oberhalb der Standfläche (113) der wenigstens 3 Standfüße (112) liegt.

5. Arbeitsplatz (100) nach einem der vorhergehenden Ansprüche,
**dadurch gekennzeichnet, dass**
die wenigstens 3 Standfüße (112) jeweils eine Standfläche (113) aufweisen und die wenigstens eine Rolle (162) in einer unteren Position der Arbeitsplatte (150) unter die Standflächen (113) der wenigstens 3 Standfüße (112) hinausragt

6. Arbeitsplatz (100) nach einem der vorhergehenden Ansprüche,
**dadurch gekennzeichnet, dass**
in der Arbeitsposition der Arbeitsplatte (150) die wenigstens 3 Standfüße (112) auf dem Fußboden aufstehen und die wenigstens eine Rolle (162) von dem Fußboden abgehoben ist.

7. Arbeitsplatz (100) nach einem der vorhergehenden Ansprüche,
**dadurch gekennzeichnet, dass**
die wenigstens eine Rolle (162) an der Unterseite des wenigstens einen Rollenträgers (160) angeordnet ist.

8. Arbeitsplatz (100) nach einem der vorhergehenden Ansprüche,
**dadurch gekennzeichnet, dass**
die wenigstens eine Hubeinheit (130) zwischen dem Fussprofil (110) und der Arbeitsplatte (150) angeordnet ist.

9. Arbeitsplatz (100) nach einem der vorhergehenden Ansprüche,
**dadurch gekennzeichnet, dass**
der wenigstens eine Rollenträger (160) in einem festen Abstand in der Höhe unterhalb der Arbeitsplatte (150) angeordnet ist.

10. Arbeitsplatz (100) nach einem der vorhergehenden Ansprüche,
**dadurch gekennzeichnet, dass**
die wenigstens eine Hubeinheit (130) elektrisch, pneumatisch oder hydraulisch angetrieben ist.

11. Arbeitsplatz (100) nach einem der vorhergehenden Ansprüche,
**dadurch gekennzeichnet, dass**
die wenigstens eine Hubeinheit (130) wenigstens zwei parallel angeordnete Hubeinheiten umfasst, die synchron betrieben werden.

12. Arbeitsplatz (100) nach einem der vorhergehenden Ansprüche,
**dadurch gekennzeichnet, dass**
die untere Position durch einen Endschalter, einen Endanschlag oder durch einen gespeicherten Positionswert vorgegeben ist.

13. Arbeitsplatz (100) nach einem der vorhergehenden Ansprüche,
**dadurch gekennzeichnet, dass**
die untere Position durch eine Verriegelung, beispielsweise einen Schlüsselschalter, Tastencode oder Programmcode geschützt ist.
